(19) Europäisches Patentamt
European Patent Office
Office européen des brevets

(11) **EP 3 859 050 A1**

(12) **EUROPEAN PATENT APPLICATION**

(43) Date of publication:
**04.08.2021 Bulletin 2021/31**

(51) Int Cl.:
*C25B 1/06* (2006.01)          *C25B 1/10* (2006.01)
*C25B 9/08* (2006.01)          *C25B 15/00* (2006.01)
*B01J 19/12* (2006.01)          *C25B 9/18* (2006.01)

(21) Application number: **20154617.3**

(22) Date of filing: **30.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Ulmer, Ulrich**
  **81369 München (DE)**

• **Ulmer, Waldemar**
  **63571 Gelnhausen (DE)**

(72) Inventors:
• **Ulmer, Ulrich**
  **81369 München (DE)**
• **Ulmer, Waldemar**
  **63571 Gelnhausen (DE)**

(74) Representative: **Grünecker Patent- und Rechtsanwälte**
  **PartG mbB**
  **Leopoldstraße 4**
  **80802 München (DE)**

(54) **ELECTROLYSIS DEVICES USING IONIZING RADIATION AND RELATED METHODS**

(57) Disclosed is an electrolysis device which advantageously enables a remarkable increase of product yield. The electrolysis device comprises: an electrolytic cell containing an electrolyte, a first pair of electrodes and a second pair of electrodes, each pair of electrodes comprising a cathode and an anode; a single voltage source electrically connected to both the first and the second pair of electrodes or two separate voltage sources independently connected to the first and the second pair of electrodes; and an ionizing radiation source, configured and arranged to ionise species present in the electrolyte; wherein the second pair of electrodes is configured to generate an electric field promoting the separation of ionised species. In addition, the present invention relates to an electrolysis system comprising the aforementioned electrolysis device and to methods of performing electrolysis.

**Description**

**FIELD OF INVENTION**

The present invention relates toan electrolytic device employing a combination of ionizing radiation and a specific electrode configuration to enable excellent product yield and efficiency. Furthermore, an electrolysis system comprising the electrolytic device and related methods are disclosed.

**BACKGROUND OF THE INVENTION**

Improving the efficiency and yield of electrolytic processes, such as the production of hydrogen ($H_2$) using electrolyzers, for example, is becoming of growing importance, since, on the one hand, the reserves of fossil fuels are decreasing, and, on the other hand, the combustion of these fossil fuels has evoked severe environmental problems through the release of carbon dioxide ($CO_2$) and other harmful gases.

Electrolytic water decomposition to gain $H_2$ and oxygen ($O_2$) using electric energy isa well-known method in electrochemistry. Typically, a water electrolyser consists of an anode, a cathode separated with an electrolyte, and a power supply. The electrolyte can be made of an aqueous solution containing ions, a proton exchange membrane (PEM) or an oxygen ion exchange ceramic membrane, for example. A direct current (DC) is applied from the negative terminal of the DC source to the cathode, and protons migrate to the cathode through a membrane or external circuit, respectively, where the $H_2$ production reaction (i.e. reduction) occurs. At the anode, the electrons produced by the electrochemical reaction return to the positive terminal of the DC source. An external source of energy is required to drive the water decomposition reaction. Theoretically, the minimum voltage for water splitting is 1.23 V. In practice, however, higher voltages are needed to overcome kinetic limitations. The electric energy required to drive the water splitting reaction represents the major limitation of the large-scale production of $H_2$ via electrolysis. This is due to the significant cost for electricity that needs to be supplied to large electrolyzers, thus impeding their economic operation.

For these reasons, several efforts have been made to improve the efficiency of water electrolysers.

For example, CA 1060839 A and US 4,107,008 A disclose an electrolysis method with improved product yield using an arrangement of tubular electrodes, wherein the method comprising the irradiation of aqueous electrolyte with electromagnetic radiation of a wavelength of less than $10^{-10}$ m (100 pm), which may be produced by an electric circuit generating high voltage pulses of electrical energy, for example. However, the described electrolysis system is undesirably complex and its efficiency still leaves room for improvement.

US 8,404,099 B2 describes the use of radiation excited water from a spent nuclear fuel pool of a nuclear power plant, which is delivered to electrolyzers to produce hydrogen and oxygen. Herein, the ionizing radiation emitted by the excited water is used to increase $H_2$ production yield. US 2015/0364781 A1 further discloses the use of radioactive isotopes as ionizing radiation source in a radiolytic electrochemical system in combination with a specific anode comprising a semiconductor component.

However, the disclosed embodiments leave room for improvement with respect to product yield, efficiency and/or device simplicity. Thus, it still remains desirable to provide an electrolytic device, which may be produced and operated in a simple manner, and which enables efficient and economic generation of hydrogen, for example.

**SUMMARY OF THE INVENTION**

The present invention solves these problems with the subject matter of the claims as defined herein. Further advantages of the present invention will be further explained in detail in the section below.

According to a first embodiment, the present invention relates to an electrolysis device comprising: an electrolytic cell containing an electrolyte, a first pair of electrodes and a second pair of electrodes, each pair of electrodes comprising a cathode and an anode; a single voltage source electrically connected to both the first and the second pair of electrodes or two separate voltage sources independently connected to the first and the second pair of electrodes; and an ionizing radiation source, configured and arranged to ionise species present in the electrolyte; wherein the second pair of electrodes is configured to generate an electric field promoting the separation of the ionised species.

In a second embodiment, the present invention relates to an electrolysis system, comprising a multiplicity of electrolysis devices according to the first embodiment, wherein the ionizing radiation sources of the electrolysis devices are positioned between neighbouring electrolytic cells.

A third embodiment of the present invention relates to a method of performing electrolysis, the method comprising the steps of: placing an electrolyte into an electrolytic cell so as to contact a first pair of electrodes and a second pair of electrodes provided in the cell, each pair of electrodes comprising a cathode and an anode; applying voltage to the two pairs of electrodes while simultaneously subjecting the electrolyte at a position between the second pair of electrodes to ionizing radiation; wherein the second pair of electrodes is configured to generate an electric field promoting the separation of ionised species.

Preferred embodiments of the electrolysis devices, systems and methods according to the present invention and other aspects of the present invention are described in the following description and the claims.

**BRIEF DESCRIPTION OF THE DRAWINGS**

FIG. 1A schematically represents the side view of an exemplary electrolytic device according to the present invention.
FIG. 1B shows the top view of the exemplary electrolytic device shown in Fig. 1A.
FIG. 2A illustrates the side view of an exemplary electrolytic device according to the present invention, using two plate-type electrode pairs.
FIG. 2B shows the top view of the exemplary electrolytic device shown in Fig. 1B.
FIG. 3 schematically illustrates an exemplary electrolytic system comprising a sequence of electrolytic devices configured in series.
FIG. 4A shows the distribution of ions immediately after the beginning of the conducted experiment with and without a second pair of electrodes with capacitor function.
FIG. 4B shows the distribution of ions after one second of the conducted experiment with and without a second pair of electrodes with capacitor function.
FIG. 5 depicts the depth-dose relationship of the 6 MV Linac 'bremsstrahlung' used for the experiments.
FIG. 6 is a diagram illustrating the total displacement in mL $H_2O$ of Comparative Examples 12 and 13.
FIG. 7 is a diagram showing the effect of irradiation on the total displacement in mL $H_2O$ on the basis of Comparative Example 15 and Example 6.
FIG. 8 is a diagram showing dependency of the total displacement in mL $H_2O$ in the experiments from the total absorbed dose.

**DETAILED DESCRIPTION OF THE INVENTION**

For a more complete understanding of the present invention, Comparative is now made to the following description of the illustrative embodiments thereof:

Electrolysis Device

A first embodiment of the present invention relates to an electrolysis device comprising: an electrolytic cell containing an electrolyte, a first pair of electrodes and a second pair of electrodes, each pair of electrodes comprising a cathode and an anode; a single voltage source electrically connected to both the first and the second pair of electrodes or two separate voltage sources independently connected to the first and the second pair of electrodes; and an ionizing radiation source, configured and arranged to ionise species present in the electrolyte; wherein the second pair of electrodes is configured to generate an electric field promoting the separation of the ionised species.

Advantageously, the electrolytic device of the present invention is capable to utilize ionizing radiation to reduce the amount of electric energy necessary to initiate the electrolysis reaction. Hereby, ionizing radiation is introduced into a modified electrolyser apparatus to decompose the electrolyte. The incorporation of the ionizing radiation into the electrolytic device effectively excites the feedstock into excited states, which facilitates its decomposition into the electrolysis products at electrode surfaces.

Initially, it is noted that - while the electrolysis of water for hydrogen production may be the most prominent example of an electrolytic process - the principles of the present invention may be applied to other industrial electrolytic reactions as well. For example, preliminary calculations have shown that excited states can also be formed when, e.g., $CO_2$ or $N_2$ are dissolved in aqueous solutions. The targeted reaction products are typically reduced forms of these reactants, such as CO or $CH_4$ when $CO_2$ is irradiated by ionizing radiation, or $NH_3$ in the case of $N_2$.

In combination with the use of ionizing radiation, the presence of at least two pairs of electrodes enables effective separation and transport of the ions. When ionizing radiation interacts with the feedstock (e.g. water), a mixture of positive and negative ions will form via $\gamma$-irradiation by a conglomerate of ions. However, the use of a conventional cathode/anode-combination (referred to herein as the first pair of electrodes) alone was shown to be inefficient to achieve the task of separating the positive ions from their negative counterpart. Specifically, it has been found that product yield may be increased to a surprisingly high degree if a second pair of electrodes is added, particularly if the second pair of electrodes is configured to enable the generation of an electric field, similarly to a capacitor, to enhance the separation of ions and migration of cations to the cathode and anions to the anode. This electrode arrangement is considered ideal for performing two functions: On one hand, the electrodes of the second pair of electrodes serve as additional cathodes and anodes, on which the evolution of products (e.g., $H_2$ and $O_2$ gases in water electrolysis) takes place. On the other hand, the second pair of electrodes has the function of negative and positive poles of a capacitor, which - upon applying a voltage - generate a strong electric field between the electrodes, which effectively separates the ions and dramatically improves the product yield.

In order to enhance the separation of negative from positive ions, it is preferred to use plate-shaped electrodes, preferably in a parallel arrangement, for the second pair of electrodes, thus enabling a function of a plate capacitor. The distance between the electrodes in a parallel plate configuration is not particularly limited and may be suitably selected by the skilled artisan depending on the shape and material of the electrodes and the electrolyte, for example.

Independently or in combination with said embodiment, it may be preferred that the first pair of electrodes is positioned between the electrodes of the second pair of electrodes, i.e. inside the electric field generated between the second pair of electrodes to more efficiently harvest the ions produced. However, the first pair of electrodes may also be placed at other positions.

The configuration of the first pair of electrodes is not particularly limited and may include solenoid-type, wire-type, mesh-type, sponge-type, plate-type electrodes and a combination thereof.

In certain embodiments, the material of the first and second pairs of electrodes may independently comprise electrically conductive materials selected from metals, metal oxides (e.g. $TiO_2$ equipped with platinum nano-particles), carbon, conductive polymers, and a combination thereof. Preferred metals include aluminum and transition metals. Further preferably, the first pair and the second pair of electrodes independently comprise stainless steel, titanium, aluminum, nickel, iron, tungsten, tantalum, one or more noble metals or alloys thereof. Particularly preferred materials for the second pair of electrodes include tungsten or tantalum.

Both the first and second pair of electrodes may be structured to increase the active surface area (e.g. with micro-pores, nano-pores, and/or micro-particles or nanoparticles of metals, alloys, semiconductors, and combinations thereof) and/or provided with cocatalysts known in the art.

In preferred embodiments, the ionizing radiation source is positioned so as to ionise species present in the electrolyte between the first and/or the second pair of electrodes, preferably between both pairs of electrodes. In case of parallel plate electrodes, an irradiation beam direction is preferably parallel to the two parallel plate electrodes.

Thermodynamically, the electrolysis reaction (including water splitting, for example) is an endothermic reaction. The energy required to drive this reaction can be supplied in the form of electricity, light, or heat. Interaction of photons of sufficient energy level ($E_{photon}$) interact with molecules to be electrolyzed can result in the formation of excited states, the nature of the excited state of the molecule depending on the energy level of the incident photon ($E_{photon}$). For example, the ionization energy of $H_2O$ amounts to 12 eV in the gaseous state, whereas in fluid form it mainly depends on the temperature and eventually on a further solvent. Here, in general, it amounts to about 9 eV. If $E_{photon}$ exceeds the energy required to ionize the water molecule ($E_{ion}$), i.e. $E_{photon} >$ (or $>>$) $E_{ion}$, then an electron can be ejected from the water molecule, this effect being also referred to as the Einstein photo effect. If such a situation occurs, the collision of the released electron with $H_2O$ molecules in its environment can lead to the ionization of additional water molecules. If the photon energy amounts to $E_{photon} > 15$ keV or $E_{photon} >> 15$ keV, a similar physical process occurs, known as Compton effect. Here, the energy level of the incident photon is so high that its collision with a water molecule causes the ejection of an electron e- and the additional ejection of a 'recoil' photon. If the energy level of the recoil photon is sufficient, then this photon can excite an additional water molecule. The whole procedure can be repeated numerous times until the energy level of the recoil photon is sufficiently low, which means that only the Einstein photo-effect occurs. Usual x-rays with energies $E_{photon} > 15$ keV or $>> 15$ keV and $\gamma$-quanta with photon energies $E_{photon}$ in the MeV domain can only lose their energy by Compton interaction. In addition to the recoil photon, the released electron due to each Compton process is itself capable to ionize various $H_2O$ molecules.

A variety of possible reactions and interactions can occur during the collision of photons with the molecules to be electrolyzed, all of which may lead to the formation of excited states, which are important intermediates of the overall electrolysis reaction. Accordingly, ionizing radiation effectively increases the density of excited states as compared to the absence of ionizing radiation.

As long as it has sufficient energy to cause excitation and/or ionization in the molecules to be electrolyzed (without affecting the nuclei of the constituent atoms), the source of ionizing radiation is not particularly limited and can originate, e.g., from the decay reactions of radioactive substances (e.g. nuclear waste), naturally occurring radioisotopes, and particle accelerators (such as e.g. linear particle accelerators), for example. Suitable ionizing radiation for use in the present invention will generally have an energy level in the range from about 0.01 MeV to about 20 MeV.

In particularly preferred embodiments, the source of ionizing radiation comprises one or more radioisotopes that emit from the group consisting of $\alpha$-particles (e.g., an $\alpha$-particle emitting radioisotope selected from the group consisting of $^{210}Po$, $^{244}Cm$, $^{238}Pu$, and $^{241}Am$, for example), $\beta$-particles (a $\beta$-particle emitting radioisotope selected from the group consisting of $^{63}Ni$, $^{90}Sr$, $^{35}S$, $^{204}Tl$, and $^3H$, $^{148}Gd$, and $^{137}Cs$, for example), neutrons, $\gamma$-rays, and combinations thereof. In a further preferred embodiment, the ionizing radiation source emits $\gamma$-radiation of a wavelength of less than 10 pm. Also preferred are $\beta$- or $\alpha$-particle-emitting radioisotopes comprised in radioactive waste products. Examples thereof include radioactive isotopes originating from nuclear fission (e.g.$^{137}$Cs) and neutron activation (e.g.$^{60}$Co) in nuclear power reactors.

The geometry of the ionizing radiation source is not particularly limited and may include a point source, a rod-shaped source, a plate-shaped source etc. In terms of a favorably even distribution of the ionizing radiation throughout the cell, the ionizing radiation source preferably has a plate or sheet shape, which may be positioned in parallel to the wall wherein the beam of ionizing radiation first enters the cell.

While not being limited thereto, the electrolyte used in the electrolysis device of the present invention is preferably an aqueous electrolyte, further preferably an aqueous electrolyte comprising a base or an acid. As examples of the base, $NaOH$, $KOH$, $Mg(OH)_2$, and mixtures thereof may be mentioned. Suitable acids include, but are not limited to $H_2SO_4$. Typically, the basic electrolyte is at a concentration in the aqueous electrolyte solution in a range of about 0.05 M to about 5 M, and the acidic electrolyte is at a concentration in the aqueous electrolyte solution in a range of about 0.05 M to about 5 M.

In embodiments, the electrolytic cell may comprise a diaphragm configured to separate the electrolysis cell into a first region and a second region, to permit ion and electron exchange between said first and second regions, and to restrict gas flow between said first and second regions. The diaphragm may be configured as a perforated membrane or mesh material serving as a barrier against mixing of gases generated at the cathode (e.g. hydrogen) and anode (e.g. oxygen), wherein the perforations and openings are sufficiently small to prevent gas bubbles to pass the barrier, while permitting the electrolytic flow of current between the electrodes. Alternatively, or in addition, gas separation may be brought about by suitable designs of non-return (check) valves known in the art.

The electrolytic cell may be equipped with one or more supply conduits for the feed materials, one or more product outlets, sensors (temperature sensors, flow sensors, pressure sensors, radioactivity detectors, etc.)and/or regulating valves (pressure reducing valves, shut-off valves, air vent valves, flow regulating valves, or the like). In addition, the electrolysis device may comprise an electronic control unit configured to perform various arithmetic processing (i.e., an arithmetic processing circuit comprising a CPU, memory, input/output circuits, and the like, or a microcomputer in which the functions of these components are integrated), and configured to control the operation of the aforementioned valves depending on the data received by the sensors or according to the operations of the user.

The material of the electrolytic cell (i.e. the cell walls) are not particularly limited as long as it is resistant to degradation by the ionizing radiation and does not shield the ionizing radiation beam to an extent at which the ionisation of the molecules to be electrolyzed is ineffective. Preferred materials in terms of their resistance to long-term γ-ray exposure include tungsten, tantalum or high-grade steel alloys. In embodiments, the material thickness at the area of the entrance beam may be reduced (e.g. to a thickness of 1 mm or less when using the aforementioned metals), whereas the remaining domains (bottom, side walls, walls without direct contact of irradiation) may have a higher thickness (e.g. more than 1 mm).

In a preferred embodiment, the electrolysis device of the present invention further comprises one or more magnets (e.g. permanent magnets) configured to produce an appropriate magnetic field and arranged so that the the field directions of the magnetic field extend between the second pair of electrodes. Such an inhomogeneous magnetic field directs charged particles either to positive or negative directions of their motion. Thus, the poles may be suitably positioned to enhance the transport of cations (e.g. $H^+$) to the cathode and the transport of anions (e.g. $OH^-$) to the anode. An additional influence may also result from the magnetic interaction with the spin of the particles. Various configurations of such magnets possible and may be suitably selected by the skilled artisan.

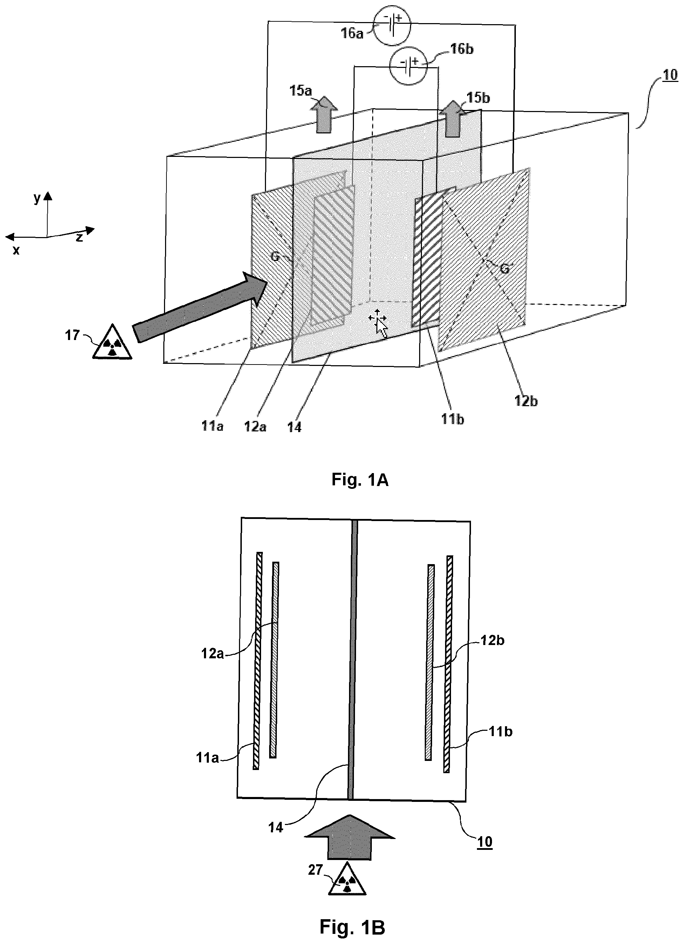

An exemplary configuration of an electrolysis device according to the present invention is illustrated in Figures 1A and 1B in side view and top view, respectively. Fig. 1A shows the side view of an electrolytic cell (10) filled with an electrolyte, wherein a first pair of electrodes (11a/11b) has been arranged between a second pair of electrodes (12a/12b). Two separate voltage sources (16a/16b) are independently connected to the first (11a/11b) and the second pair of electrodes (12a/12b), respectively. A diaphragm (14) is positioned between each of the cathodes and anodes of the electron pairs to prevent mixing of the product gas. An ionizing radiation source (17) is positioned in z-direction so that the radiation beam is directed between the cathodes and anodes of the electron pairs. Upon applying an appropriate DC voltage to the electrode pairs via the voltage sources (16a/16b), the electrolysis process is initialised, and the gaseous products may be diverted through the first reaction product outlet and the second reaction product outlet. While the (inner) first pair of electrodes (11a/11b) are primarily responsible for electrolysis, the main function of the (outer) second pair of electrodes (12a/12b) is to generate an electric field within the cell (10) so as to enhance the separation of ions produced during electrolysis at the first pair of electrodes (11a/11b). Accordingly, the efficiency of the electrolysis and the product yield may be significantly improved.

In general, if the second pair of electrodes is configured as parallel plate electrodes, it is preferable that the dose of ionizing radiation absorbed by the electrolyte at the depth corresponding to the position of the geometric center of each of the parallel plate electrodes is in the range of 0.1 to 3 Gy, preferably between 0.2 to 2.5 Gy, more preferably between 0.5 and 2 Gy, especially preferably between 0.7 and 1.9 Gy. With reference to Fig. 1A, it is noted that the term "depth" denotes the depth in z-direction. The geometric centers of the parallel plate electrodes are labeled as G and G' in Fig. 1A, respectively.

Electrolysis System

A second embodiment of the present invention relates to an electrolysis system, comprising a multiplicity of electrolysis devices according to the first embodiment, wherein the ionizing radiation sources of the electrolysis devices are positioned between neighbouring electrolytic cells.

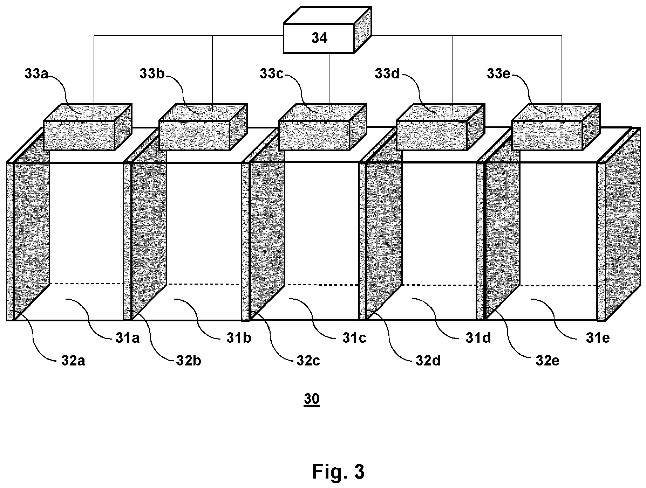

While not being limited thereto, an exemplary configuration of this embodiment is shown in Fig. 3. Herein, multiple electrolytic devices (31a-e) are placed in series, separated with the ionizing radiation sources (32a-e). In addition, each electrolytic device is equipped with a local supply/exhaust/control system (33a-e), which may include sensors, vents, inlet/outlet ports, valves and/or electronic control units as mentioned above. It is noted that, in general, the number of electrolytic devices is not restricted as long as the radiation protection requirements are satisfied. For this purpose, a global control system (34) may be implemented in order to survey all functions and to satisfy the radiation protection requirements.

The geometry of cells in this embodiment may be suitably adjusted depending on the ionizing radiation source and the dose distribution within the electrolytic cells. For example, if $^{137}$Cs (the $\gamma$-energy of which amounts to 0.7 MeV) is used as a sheet-shaped radiation source with a thickness of 2 mm in the configuration of Fig. 3, it can be calculated that a cell with aqueous electrolyte having the length of approximately 18 cm is irradiated with a nearly homogeneous dose distribution throughout the cell.

Electrolysis Methods

A third embodiment of the present invention relates to a method of performing electrolysis, the method comprising: placing an electrolyte into an electrolytic cell so as to contact a first pair of electrodes and a second pair of electrodes provided in the cell, each pair of electrodes comprising a cathode and an anode; applying voltage to the two pairs of electrodes while simultaneously subjecting the electrolyte at a position between the second pair of electrodes to ionizing radiation; wherein the second pair of electrodes is configured to generate an electric field promoting the separation of ionised species formed by the ionizing radiation.

In a preferred embodiment, the electrolysis is performed in a device according to the first embodiment or in an electrolysis system according to the second embodiment.

In a particularly preferred embodiment of the method, the second pair of electrodes is configured as parallel plate electrodes, and the dose of ionizing radiation absorbed by the electrolyte at the position corresponding to the symmetry axis of each of the parallel plate electrodes is in the range of 0.1 to 3 Gy, preferably between 0.2 to 2.5 Gy, more preferably between 0.5 and 2 Gy, especially preferably between 0.7 and 1.9 Gy.

As has been explained above in the context with the first embodiment, carrying out the electrolysis process accordingly enhances its effectivity and substantially improves the product yield when compared to methods which do not use ionizing radiation or those which only employ a single (i.e. the first) pair of electrodes.

It will be understood that the preferred features of the first to third embodiments may be freely combined in any combination, except for combinations where at least some of the features are mutually exclusive.

**EXAMPLES**

For the experiments, electrolytic cells with dimensions 18 cm x 13 cm x 18 cm were manufactured, with glass bottom and side walls having a thickness of 5 mm.

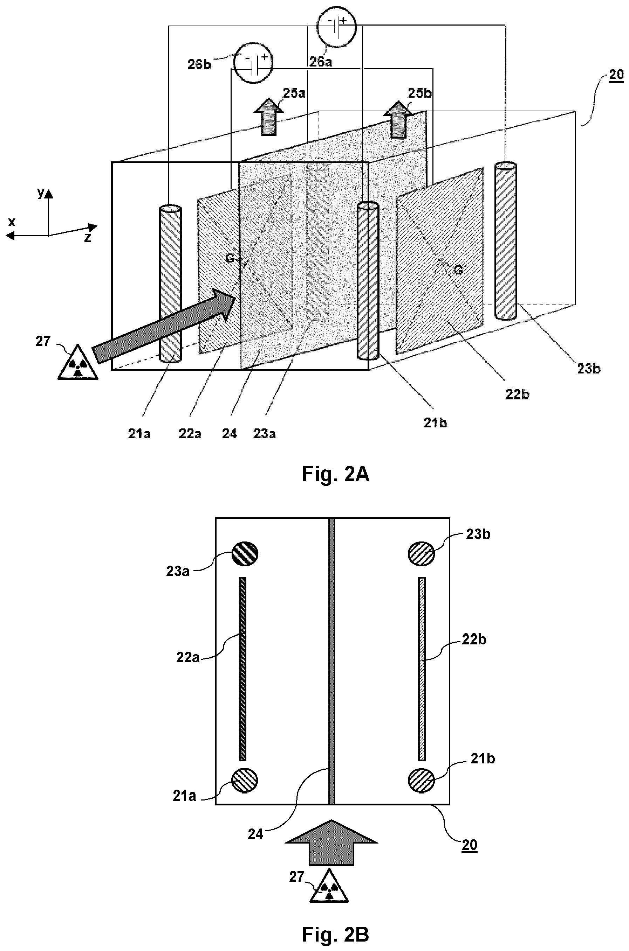

A schematic representation of the electrolytic cell used for the first series of experiments is shown in Fig. 2A (side view) and Fig. 2B (top view). A first pair of solenoid-shaped electrodes (21a/21b) made from high-grade stainless steel and an identical third pair of electrodes (23a/23b) was inserted into the cell (20) and connected to a DC power supply (26a). In addition, a second pair of electrodes (22a/22b), wherein each electrode was made of high-grade steel with 2 mm thickness and an area of 15 cm x 10 cm were placed into the cell in a parallel plate arrangement and connected to a separate DC voltage source (26b). The cell was subdivided into two separate compartments by a diaphragm (24) to avoid the formation of explosive gas mixtures. As a diaphragm, an acrylic plate was used, which comprised perforations having a diameter of 1 mm, wherein the distance between the holes was 5 mm.

After arrangement of all components, the electrolytic cell was closed using an acrylic glass plate and sealed using glue. The acrylic glass top contained several valves, through which water could be introduced into the apparatus, and the formed gasses could be released. The apparatus was tested for leakage before each experiment. The amount of gas produced in a given time period was measured by displacing water in an upside-down graduated cylinder immersed in a water tank. 50 g NaOH in 2.5 L of double-distilled water was used as the electrolyte.

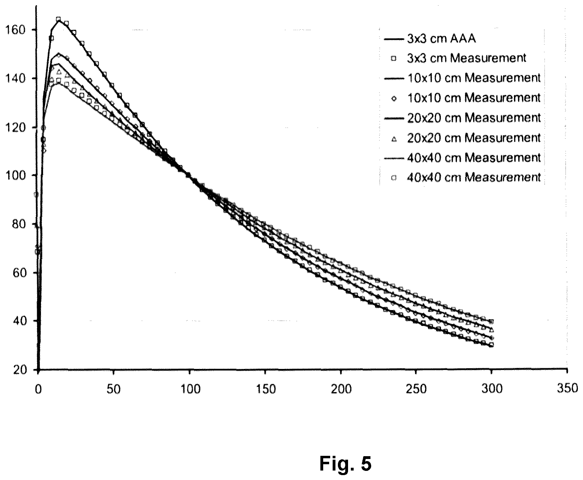

As a radiation source, a linear accelerator (usual abbreviation: Linac) delivering 6 MV photons, the depth/dose-curve of which is shown in Figure 5, was used. Herein, the depth of absorption materials (i.e. water) is shown in mm (abscissa) and the relative percentage of dose absorption (normalized to a depth of 100 mm) in the ordinate. Based on the geometry of the cell, a beam with a lateral cross-section of 10 cm x 10 cm was applied with a focus-surface distance (SSD) of 89.5 cm. The beam properties show a build-up effect at the surface and a maximum dose at the depth 1.9 cm. If 100 MUs in one minute are applied (1 Gy at depth 10 cm, which approximately corresponds to the position of the geometric center of each of the parallel plate electrodes), then the dose at surface amounts to 1.5 Gy and to 0.75 Gy at the end of the cell (z-axis in Fig. 2A). The dose at the entrance surface only amounts to 30 % (0.5 Gy, build-up domain in Figure 5), since the released electrons travel towards the inside of the aquarium box, where the maximum is reached. The measurements were performed using similar or slightly higher radiation energies as would be released during the radioactive decay of $^{137}$Cs, the most abundant isotope in radioactive waste.

Prior to carrying out experiments, a few theoretical considerations have been made:

Without being bound by a specific theory, a description of the distribution of ions can be solved via well-known diffusion equations (Eq. 1a) to (Eq. 1c):

$$-\frac{\partial}{\partial t}c + D\Delta c = 0 \qquad \text{(Eq. 1a)}$$

$$c = N(t) \cdot \exp(-\bar{x}^2 / 4Dt) \qquad \text{(Eq. 1b)}$$

$$c_1 = N_1(t) \cdot \bar{x} \cdot \exp(-\bar{x}^2 / 4Dt) \qquad \text{(Eq. 1c)}$$

Equation (Eq. 1a) represents the diffusion equation in three dimensions. Upon restriction to the x-direction, which is associated with a lateral profile, the function (Eq. 1b) is obtained. Herein, the parameter $D$ refers to a diffusion coefficient and states the time-dependent motion of the concentration $c$ and represents the mobility of the ion distribution in a medium (or solvent, which might contain electrolytes, such as $Na^+$ and $OH^-$ dissociated in water).The solution function (Eq. 1b) of equation (Eq. 1a) represents the most known distribution function, but the solution function (1c) with the concentration distribution $c_1$ also solves eq. (Eq. 1a) (additional power expansions taken aside for simplification).

A situation, wherein at both sites in x- and $\gamma$-direction a static electric field is present, which also shows an extension in z-direction according to the length of the concentration distribution, may be described with the following modification of the diffusion equation (Eq. 2):

$$-\frac{\partial}{\partial t}c + D\Delta c + F \cdot Q \cdot \bar{x} \cdot c = 0 \qquad \text{(Eq. 2)}$$

In equation (Eq. 2), $Q$ refers to the charge of the ions and $F$ to the Faraday constant. Eq. (2) can be solved exactly, but by taking account of some wall restriction given by the electric field-producing capacitor, a solution according to Eq. 3 is arrived at:

$$c_{ion}(t) \approx c_0 \cdot N(t)\exp[(-\bar{x}^2 / 4Dt] + c_1 \cdot N_1(t) \cdot \bar{x} \cdot \exp[-\bar{x}^2 / 4D't] \qquad \text{(Eq. 3)}$$

Herein, the coefficient $c_1$ is proportional to $F$, $Q$, and $D'$, which is associated with a dielectric fluid, D' being closely related to the mobility of the ions in the solvent.

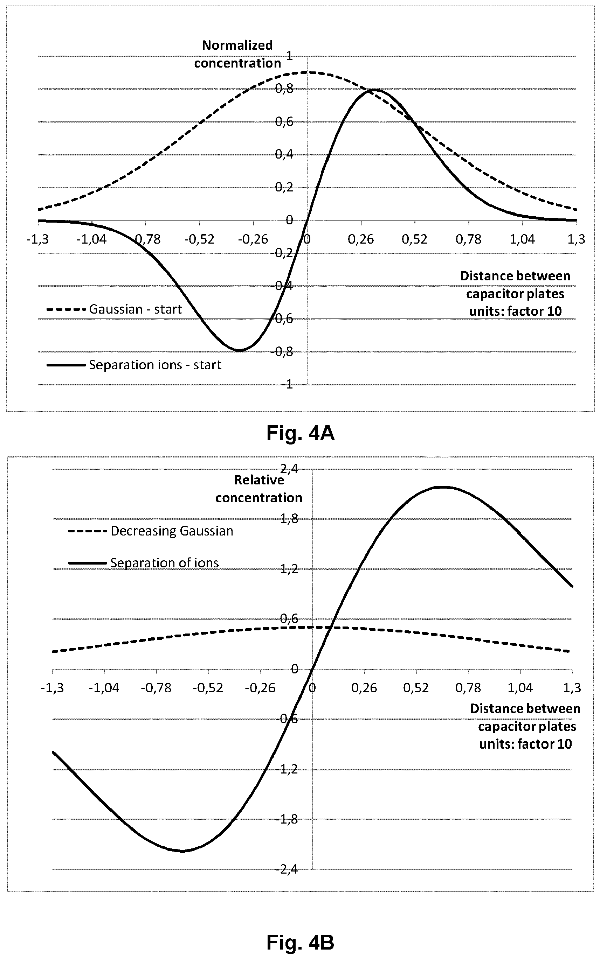

The equations shown above have been solved and the resulting ion concentration profiles have been plotted in Figures 4A and 4B. According to the specific radiation beam properties, including the transverse profiles at each depth of the passing beam, the conglomerate shows the shape of a Gaussian distribution resulting from the beam scatter. Figure 4A shows the distribution at the beginning of the experiment, immediately after the ionizing radiation is inserted into the apparatus. Figure 4A shows the ion distribution after the time of about one second. The non-Gaussian curves in Figures 4A and 4B show the effect of an electric field produced by the capacitors on the ion distribution. The presence of the field effectively separates the ions and causes a migration to anode and cathode, respectively. As long as the irradiation is present, a stationary state between new production of ions and transport of them to the capacitor plates will be established. A principal difference between the two figures is an accumulation effect, i.e., the travelling ion concentrations increase due to the comparably slow diffusion velocity. This property changes the relative amplitude of the non-Gaussian curve.

In the first series of experiments, the electrolysis performance of different electrode configurations (E: only first and third pairs of electrodes active; C: only the second pair of electrodes active; and E+ C: all electrodes active) have been compared, and the displacement of $H_2O$ was measured in dependence of the dose rate. The irradiation was performed with three different intensities: 100 MU per minute, 200 MU in 30 seconds, and 300 MU in 20 seconds. Herein, the unit MU (monitor unit) is a measure of machine output from a clinical accelerator, the monitor chamber reading 100 MU when an absorbed dose of 1 Gy is delivered to a point at the depth of maximum dose in a water-equivalent phantom whose surface is at the isocenter of the machine with a field size at the surface of 10 cm $\times$ 10 cm.

The results of the measurements are shown in the following Table 1

TABLE 1

|  | Voltage [V] | Current [A] | Configuration | Duration of Electrolysis / Irradiation [s] | Delivered Dose [Gy] / Dose Rate [MU·min⁻¹] | Displacement of $H_2O$ [mL] |
|---|---|---|---|---|---|---|
| Comparative Example 1 | 3.7 (E) 3.8 (C) | 0.79 (E) 1.48 (C) | E + C | 480 | 0 / 0 | 205 |
| Comparative Example 2 | 3.5 (E) 5.0 (C) | 0.34 (E) 2.79 (C) | E + C | 300 | 0 / 0 | 210 |
| Comparative Example 3 | 5.9 (E) 8.1 (C) | 1.28 (E) 5.16 (C) | E + C | 180 | 0 / 0 | 210 |
| Comparative Example 4 | 4.3 (E) 7.4 (C) | 0.33 (E) 5.16 (C) | E + C | 210 | 0 / 0 | 200 |
| Comparative Example 5 | 3.2 (E) | 0.82 (E) | E | 480 | 0 / 0 | 85 |
| Comparative Example 6 | 3.4 (C) | 1.34 (C) | C | 540 | 0 / 0 | 90 |
| Comparative Example 7 | 7.5 (C) | 5.16 (C) | C | 120 | 0 / 0 | 200 |
| Comparative Example 8 | 8.2 (C) | 5.16 (C) | C | 60 | 1 / 100 | 120 |
| Comparative Example 10 | 3.8 (E) | 1.28 (E) | E | 130 | 1 / 100 | 25 |
| Comparative Example 11 | 4.1 (C) | 1.31 (C) | C | 132 | 1 / 100 | 195 |
| Example 1 | 8.2 (E) 8.2 (C) | 5.17 (E) 6.18 (C) | E + C | 70 | 1 / 100 | 260 |
| Example 2 | 7.4 (E) 8.2 (C) | 5.16 (E) 5.16 (C) | E + C | 75 | 1 / 200 | 245 |
| Example 3 | 7.4 (E) 8.2 (C) | 6.80 (E) 5.16 (C) | E + C | 90 | 1 / 100 | 330 |
| Example 4 | 7.4 (E) 8.2 (C) | 6.76 (E) 5.16 (C) | E + C | 90 | 3 / 300 | 290 |
| Example 5 | 7.4 (E) 8.2 (C) | 6.73 (E) 5.16 (C) | E + C | 88 | 3 / 100 | 362 |

The protocol of the first measurement series clearly shows the differences in hydrogen yield with and without irradiation. The highest hydrogen yields were observed at dose rates of 100 MU/min. In addition, it is shown that the third pair of electrodes does not generate an electric field so as to effectively promote the separation of ionised species.

For a second series of experiments, the solenoid-type electrodes (i.e. the first and third pair of electrodes) were replaced with a first pair of stainless steel electrodes having a plate-like shape (15 cm x 2.5 cm) and the second pair of electrodes was replaced with larger stainless steel plates with dimensions of 16 cm x 12.5 cm. The electrodes were arranged in accordance to Figures 1A and 1B.

The results of the second series of experiments are shown in Table 2:

TABLE2

| | Voltage [V] | Current [A] | Configuration | Electrolysis Duration [s] | Dose Rate [MU·min$^{-1}$] | Total Dose [Gy] | Displacement of $H_2O$ per minute [mL·min$^{-1}$] |
|---|---|---|---|---|---|---|---|
| Comparative Example 12 | 4.02 (C) | 1.295 (C) | C | 120 | 100 | 2 | 97 |
| Comparative Example 13 | 4.02 (E) | 1.295 (E) | E | 120 | 100 | 2 | 11 |
| Comparative Example 14 | 4.02 (E) 4.02 (C) | 1.295 (E) 1.295 (C) | E + C | 120 | 0 | 0 | 10 |
| Comparative Example 15 | 8.02 (E) 7.41 (C) | 6.82 (E) 5.19 (C) | E + C | 180 | 0 | 0 | 66 |
| Comparative Example 16 | 7.42 (E) 7.42 (C) | 2.96 (E) 2.96 (C) | E + C | 180 | 0 | 0 | 55 |
| Example 6 | 8.02 (E) 7.41 (C) | 6.82 (E) 5.19 (C) | E + C | 60 | 100 | 1 | 445 |
| Example 7 | 7.42 (E) 7.42 (C) | 2.96 (E) 2.96 (C) | E + C | 60 | 100 | 1 | 336 |
| Example 8 | 7.42 (E) 7.42 (C) | 2.96 (E) 2.96 (C) | E + C | 120 | 100 | 2 | 332 |
| Example 9 | 7.42 (E) 7.42 (C) | 2.96 (E) 2.96 (C) | E + C | 180 | 100 | 3 | 325 |

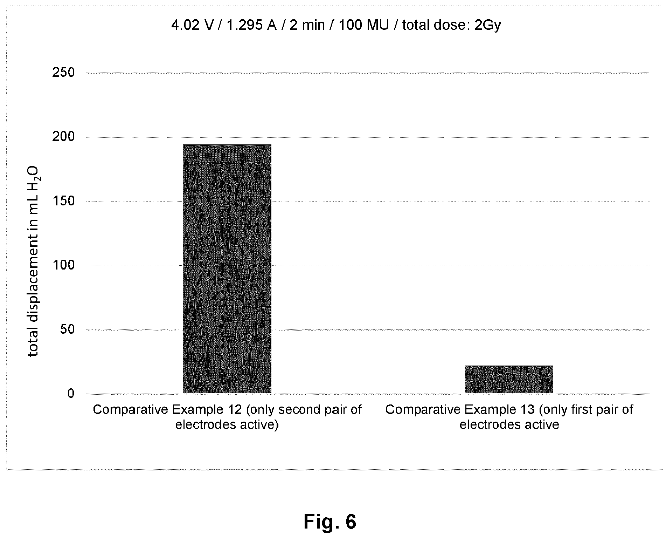

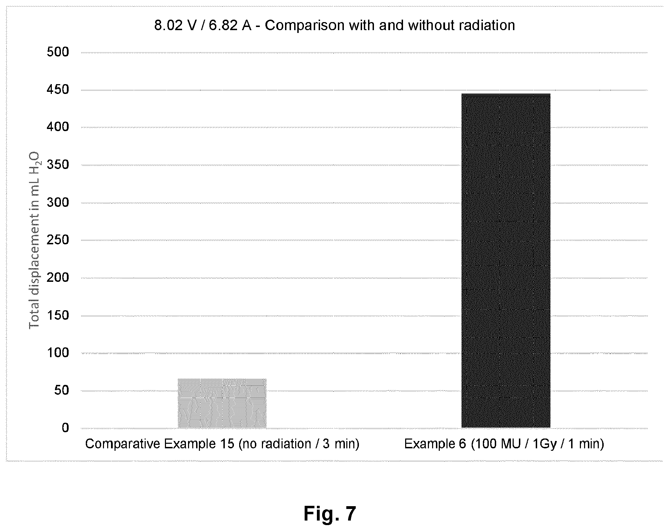

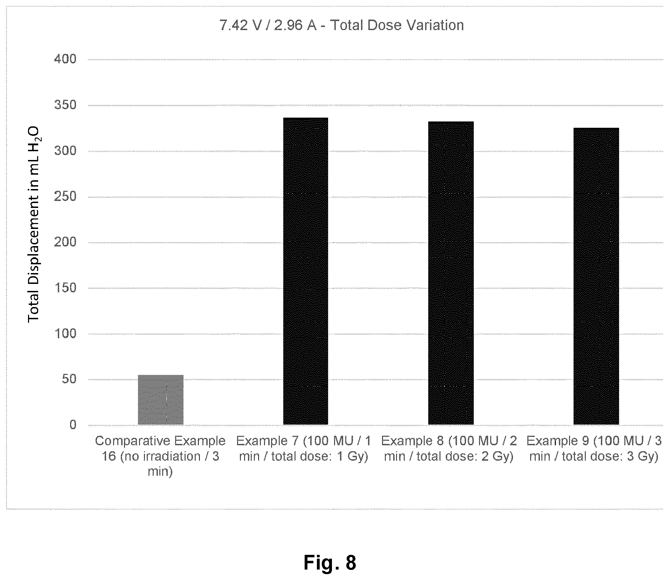

Fig. 6 shows the total displacement of $H_2O$ of Comparative Examples 12 and 13. The effect of ionizing radiation on the water conversion is shown in Figures 7 and 8 by means of Comparative Example 15 and Example 6, as well as Comparative Example 16 and Examples 7 to 9, which have been performed at the same supply voltage, respectively. Overall, the comparison between Comparative Examples 12 to 16 and Examples 6 to 9 demonstrates that the use of ionizing radiation any the implementation of the two pairs of electrodes has a synergistic effect on the effectivity of water electrolysis and the hydrogen yield.

Once given the above disclosure, many other features, modifications, and improvements will become apparent to the skilled artisan.

**REFERENCE NUMERALS**

10:       electrolytic cell
11a/11b:   first pair of electrodes
12a/12b:   second pair of electrodes
14:       diaphragm
15a:      first reaction product outlet
15b:      second reaction product outlet
16a/16b:   voltage source(s)

17:        ionizing radiation source
20:        electrolytic cell
21a/21b:   first pair of electrodes
22a/22b:   second pair of electrodes
23a/23b:   third pair of electrodes
24:        diaphragm
27:        ionizing radiation source
30:        electrolysis cell stack
31a-e:     electrolytic cells
32a-e:     ionizing radiation sources
33a-e:     local supply/exhaust/control system
34:        global control system

**Claims**

1.  An electrolysis device comprising:

    an electrolytic cell containing an electrolyte, a first pair of electrodes and a second pair of electrodes, each pair of electrodes comprising a cathode and an anode;
    a single voltage source electrically connected to both the first and the second pair of electrodes or two separate voltage sources independently connected to the first and the second pair of electrodes; and
    an ionizing radiation source, configured and arranged to ionise species present in the electrolyte;
    wherein the second pair of electrodes is configured to generate an electric field promoting the separation of ionised species.

2.  The electrolysis device according to claim 1, wherein the second pair of electrodes is configured as parallel plate electrodes, and wherein the first pair of electrodes may be optionally positioned between the two parallel plate electrodes.

3.  The electrolysis device according to claim 2, wherein the ionizing radiation source is positioned so as to ionise species present in the electrolyte between the two parallel plate electrodes, preferably so that an irradiation beam direction is parallel to the two parallel plate electrodes.

4.  The electrolysis device according to any of claims 1 to 3, wherein the electrolyte is an aqueous electrolyte, preferably an aqueous electrolyte comprising a base or an acid, wherein the base is further preferably any of NaOH, KOH or $Mg(OH)_2$ and the acid is further preferably $H_2SO_4$.

5.  The electrolysis device according to any of claims 1 to 4, wherein the electrolytic cell comprises a diaphragm configured to separate said electrolysis cell into a first region and a second region, to permit ion and electron exchange between said first and second regions, and to restrict gas flow between said first and second regions.

6.  The electrolysis device according to any of claims 1 to 5, wherein the ionizing radiation source emits gamma radiation of a wavelength of less than 10 pm.

7.  The electrolysis device according to claim 6, wherein the ionizing radiation source is a linear accelerator.

8.  The electrolysis device according to any of claims 1 to 6, wherein the ionizing radiation source comprises a beta particle or alpha particle emitting radioisotope, preferably a beta particle or alpha particle emitting radioisotope comprised in radioactive waste product, and more preferably $^{137}Cs$ and/or $^{60}Co$.

9.  The electrolysis device according to any of claims 1 to 8, wherein the first pair of electrodes consists of solenoid-type, wire-type, mesh-type, sponge-type and/or plate-type electrodes.

10. The electrolysis device according to any of claims 1 to 9, wherein the first pair and the second pair of electrodes independently comprise stainless steel, titanium, aluminium, nickel, iron, tungsten, tantalum, one or more noble metals or alloys thereof.

**11.** The electrolysis device according to any of claims 1 to 10, further comprising one or more magnets configured to produce a magnetic field and arranged so that the the field directions of the magnetic field extend between the second pair of electrodes.

**12.** Electrolysis system, comprising a multiplicity of electrolysis devices according to any of claims 1 to 11, wherein the ionizing radiation sources of the electrolysis devices are positioned between neighbouring electrolytic cells.

**13.** Method of performing electrolysis, the method comprising:

placing an electrolyte into an electrolytic cell so as to contact a first pair of electrodes and a second pair of electrodes provided in the cell, each pair of electrodes comprising a cathode and an anode;
applying voltage to the two pairs of electrodes while simultaneously subjecting the electrolyte at a position between the second pair of electrodes to ionizing radiation;
wherein the second pair of electrodes is configured to generate an electric field promoting the separation of ionised species formed due to the ionizing radiation.

**14.** Method according to claim 13, wherein the electrolysis method is performed in a device according to any of claims 1 to 11.

**15.** Method according to any of claims 13 or 14, wherein the second pair of electrodes is configured as parallel plate electrodes, and wherein the dose of ionizing radiation absorbed by the electrolyte at the depth corresponding to the position of the symmetric axis of each of the parallel plate electrodes is in the range of 0.1 to 3 Gy, preferably between 0.2 to 2.5 Gy, more preferably between 0.5 and 2 Gy, especially preferably between 0.7 and 1.9 Gy.

**Fig. 1A**

**Fig. 1B**

**Fig. 2A**

**Fig. 2B**

Fig. 3

Fig. 4A

Fig. 4B

**Fig. 5**

4.02 V / 1.295 A / 2 min / 100 MU / total dose: 2Gy

Fig. 6

Fig. 7

**Fig. 8**

Europäisches
Patentamt

European
Patent Office

Office européen
des brevets

# EUROPEAN SEARCH REPORT

**Application Number**

EP 20 15 4617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/132046 A1 (EVERTRON HOLDINGS PTE LTD [JP]) 4 July 2019 (2019-07-04) | 1-3, 9-11,13, 14 | INV.<br>C25B1/06<br>C25B1/10 |
| A | * paragraphs [0023], [0040], [0051], [0058], [0059], [0128], [0129], [0130]; claims 1, 11, 16, 30; figures 30, 37-38 * | 4-8,12, 15 | C25B9/08<br>C25B15/00<br>B01J19/12<br>C25B9/18 |
| X | US 2002/170816 A1 (LEFFLER CHARLES E [US] ET AL) 21 November 2002 (2002-11-21) | 1,2,4,5, 9-11 | |
| A | * paragraph [0056] - paragraph [0058]; claims 1-3, 8, 9, 10; figures 1-4, 8 *<br>* paragraphs [0064] - [0066]; figure 7 * | 3,6-8, 12-15 | |
| A | US 2008/213641 A1 (OSTERMANN DIETER [DE] ET AL) 4 September 2008 (2008-09-04)<br>* paragraph [0073] - paragraph [0076]; claims 31, 52-60; figure 6 *<br>* paragraphs [0014], [0041] * | 1-15 | |
| A | JP 2003 275602 A (CENTRAL RES INST ELECT) 30 September 2003 (2003-09-30)<br>* claims 1-11; figures 3, 4 * | 1-15 | **TECHNICAL FIELDS SEARCHED (IPC)**<br><br>C25B<br>B01J |
| A | US 2007/284244 A1 (DAVIDSON NEHEMIA [US]) 13 December 2007 (2007-12-13)<br>* claims 1-33; figure 10 * | 1-15 | |
| A,D | US 4 107 008 A (HORVATH STEPHEN) 15 August 1978 (1978-08-15)<br>* claims 1-14; figure 11 * | 1-15 | |

The present search report has been drawn up for all claims

| Place of search | Date of completion of the search | Examiner |
|---|---|---|
| Munich | 26 June 2020 | Teppo, Kirsi-Marja |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

 

& : member of the same patent family, corresponding
 document

EPO FORM 1503 03.82 (P04C01)

**ANNEX TO THE EUROPEAN SEARCH REPORT
ON EUROPEAN PATENT APPLICATION NO.**

EP 20 15 4617

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2020

| Patent document cited in search report | | Publication date | Patent family member(s) | | Publication date |
|---|---|---|---|---|---|
| WO 2019132046 | A1 | 04-07-2019 | CA | 3082461 A1 | 04-07-2019 |
| | | | JP WO2019132046 A1 | | 16-01-2020 |
| | | | TW | 201937985 A | 16-09-2019 |
| | | | WO | 2019132046 A1 | 04-07-2019 |
| US 2002170816 | A1 | 21-11-2002 | NONE | | |
| US 2008213641 | A1 | 04-09-2008 | AU | 2005221010 A1 | 22-09-2005 |
| | | | CA | 2558226 A1 | 22-09-2005 |
| | | | DE 102004012303 B3 | | 14-07-2005 |
| | | | EP | 1723267 A2 | 22-11-2006 |
| | | | US | 2008213641 A1 | 04-09-2008 |
| | | | WO | 2005088758 A2 | 22-09-2005 |
| JP 2003275602 | A | 30-09-2003 | JP | 4066320 B2 | 26-03-2008 |
| | | | JP | 2003275602 A | 30-09-2003 |
| US 2007284244 | A1 | 13-12-2007 | CA | 2579701 A1 | 09-12-2007 |
| | | | CA | 2579737 A1 | 09-12-2007 |
| | | | US | 2007284244 A1 | 13-12-2007 |
| | | | US | 2007284260 A1 | 13-12-2007 |
| US 4107008 | A | 15-08-1978 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 1060839 A
- US 4107008 A
- US 8404099 B2
- US 20150364781 A1